# EUROPÄISCHE PATENTANMELDUNG

(11) **EP 1 264 726 A2**
(43) Veröffentlichungstag der Anmeldung: **11.12.2002**
(21) Anmeldenummer: 02009965.1
(22) Anmeldetag: 03.05.2002
(51) Int. Cl.: B60K 15/04

(54) **Kraftfahrzeug-Kraftstofftank mit einem Einfüllstutzen zur Aufnahme einer Zapfpistole für Dieselkraftstoff**

(30) Priorität: 07.06.2001 DE 10127751
(71) Anmelder: Bayerische Motoren Werke Aktiengesellschaft, 80809 München (DE)
(72) Erfinder: Pabinger, Gerhard, 4451 Garsten (AT)

(57) **Zusammenfassung**

Die Erfindung betrifft einen Kraftfahrzeug-Kraftstofftank mit einem Einfüllstutzen (1), der hinsichtlich seiner Abmessung zur Aufnahme einer einen größeren Durchmesser aufweisenden Tank-Zapfpistole (2), insbesondere einer Zapfpistole für Dieselkraftstoff, vorgesehen ist, sowie mit einem Element (3), welches ein Befüllen des Kraftstofftanks mit einer Tank-Zapfpistole mit dem besagten größeren Durchmesser zulässt, während der Versuch, den Kraftstofftank aus einer Tank-Zapfpistole mit einem kleineren Durchmesser zu befüllen, behindert wird. Erfindungsgemäß ist das Element ein in den Einfüllstutzen eingesetztes Formstück mit einer derartigen Abmessung, dass dieses Formstück mit seinem einer eingeführten Tank-Zapfpistole zugewandten Endabschnitt in den Innenquerschnitt einer Zapfpistole mit größerem Durchmesser hineinragen kann, während eine Tank-Zapfpistole mit kleinerem Durchmesser an der Stirnseite dieses Formstück-Endabschnitts zum Anschlag kommt und somit nicht über diesen Endabschnitt gesteckt werden kann. Bevorzugt ist der Endabschnitt des Formstücks durch zwei sich kreuzende Stege gebildet, und es ist das Formstück über einen sich in Richtung zum Tank an den Endabschnitt anschließenden Befestigungsabschnitt, in welchem Durchtrittsöffnungen für einzufüllenden Kraftstoff vorgesehen sind, an der Wand des Einfüllstutzens oder Tankvolumens befestigt.

## Beschreibung

Die Erfindung betrifft einen Kraftfahrzeug-Kraftstofftank mit einem Einfüllstutzen, der hinsichtlich seiner Abmessung zur Aufnahme einer einen größeren Durchmesser aufweisenden Tank-Zapfpistole, insbesondere einer Zapfpistole für Dieselkraftstoff, vorgesehen ist, sowie mit einem Element, welches ein Befüllen des Kraftstofftanks mit einer Tank-Zapfpistole mit dem besagten größeren Durchmesser zulässt, während der Versuch, den Kraftstofftank aus einer Tank-Zapfpistole mit einem kleineren Durchmesser zu befüllen, behindert wird. Zum technischen Umfeld wird beispielshalber auf die DE 196 39 825 A1 verwiesen, während ein Kraftstofftank nach dem Oberbegriff des Anspruchs 1 in der nicht vorveröffentlichten deutschen Patentanmeldung 100 51 847 beschrieben ist.

Mit der Markteinführung von Bleifrei-Kraftstoffen für Ottomotoren wurden die bis dahin für sämtliche Kraftstoffsorten einen einheitlichen Durchmesser aufweisenden Tank-Zapfpistolen (jedenfalls solche für Personenkraftwagen) für diesen neuen Kraftstoff im Durchmesser reduziert. Durch einen sog. Restriktor mit einer sog. Bleifrei-Klappe im Einfüllrohr von Kfz.-Kraftstofftanks war und ist es somit nicht möglich, bleihaltigen Otto-Kraftstoff oder Diesel-Kraftstoff (die an den Tankstellen hierfür vorhandenen Zapfpistolen besitzen den gleichen, gegenüber den Zapfpistolen für Bleifrei-Kraftstoff größeren Durchmesser) in den Kraftstofftank eines Kfz.'s einzufüllen, das für Betrieb mit Bleifrei-Kraftstoffen vorgesehen ist. Auf diese Weise ist der an diesen Fahrzeugen vorhandene Abgaskatalysator sicher vor einer Zerstörung, hervorgerufen durch Falschbetankung mit bleihaltigem Kraftstoff, geschützt.

Weiterhin ist es jedoch möglich, dass versehentlich bleifreier Otto-Kraftstoff (Benzin) in den Tank eines Kfz.'s eingefüllt wird, welches mit Dieselkraftstoff zu betreiben ist. Wird dann einem Dieselmotor reiner Ottokraftstoff zugeführt, so kann dies zu erheblichen Schäden führen. Allenfalls ein geringer Anteil von Ottokraftstoff bzw. Benzin in einer relativ großen Menge von Dieselkraftstoff kann toleriert werden (und wurde bzw. wird teilweise im Winter beigemengt, um den Kaltstart zu erleichtern), einen höheren Benzinanteil in einem Diesel-Benzin-Kraftstoffgemisch gilt es jedoch unbedingt zu vermeiden.

Mit der vorliegenden Erfindung soll nun aufgezeigt werden, wie eine Falschbetankung insbesondere eines mit Dieselkraftstoff zu betreibenden Fahrzeuges mit Bleifrei-Benzin vermieden werden kann, bzw. wie ein Nutzer unübersehbar darauf hingewiesen werden kann, dass er fälschlicherweise einen Kraftstofftank, der mit einer Tank-Zapfpistole mit einem größeren Durchmesser befüllt werden sollte, mit Kraftstoff aus einer Zapfpistole mit kleinerem Durchmesser zu befüllen versucht. (=Aufgabe der Erfindung).

Die Lösung dieser Aufgabe ist dadurch gekennzeichnet, dass ein in der nicht vorveröffentlichten deutschen Patentanmeldung 100 51 847 beschriebenes Element, welches ein Befüllen des Kraftstofftanks mit einer Tank-Zapfpistole mit dem besagten größeren Durchmesser zulässt, während der Versuch, den Kraftstofftank aus einer Tank-Zapfpistole mit einem kleineren Durchmesser zu befüllen, behindert wird, als ein in den Einfüllstutzen eingesetztes Formstück ausgebildet und derartig bemessen ist, dass dieses Formstück mit seinem einer eingeführten Tank-Zapfpistole zugewandten Endabschnitt in den Innenquerschnitt einer Zapfpistole mit größerem Durchmesser hineinragen kann, während eine Tank-Zapfpistole mit kleinerem Durchmesser an der Stirnseite dieses Formstück-Endabschnitts zum Anschlag kommt und somit nicht über diesen Endabschnitt gesteckt werden kann. Vorteilhafte Aus- und Weiterbildungen sind im abhängigen Anspruch aufgeführt.

Erfindungsgemäß ist irgendein Zapfen oder dgl., hier allgemein Formstück genannt, im Einfüllstutzen angeordnet und erstreckt sich dabei im wesentlichen in dessen Längsrichtung, wobei es die Abmessung dieses Zapfens oder Formstücks erlaubt, dass eine "richtige" Tank-Zapfpistole mit größerem Durchmesser über diesen Zapfen oder einen Endabschnitt dieses Formstücks gesteckt wird und somit ausreichend weit in den Einfüllstutzen eingeführt werden kann. Hingegen stößt eine Tank-Zapfpistole mit kleinerem Durchmesser beim Versuch, diese in den Einfüllstutzen einzuführen, an der äußeren Stirnseite die Zapfens oder Formstück-Endabschnittes an und kann somit für den Nutzer oder Bediener unübersehbar nicht in den Einfüllstutzen eingeführt werden. Indem somit der Zapfen oder allgemein Formstück-Endabschnitt so bemessen ist, dass er in den Innenquerschnitt einer "richtigen" Tank-Zapfpistole mit größerem Durchmesser hineinragen kann, in den Innenquerschnitt einer "falschen" Tank-Zapfpistole mit kleinerem Durchmesser hingegen nicht, wird der Bediener oder Nutzer beim Betanken unübersehbar darauf aufmerksam gemacht, ob bzw. dass er die falsche oder die richtige Tank-Zapfpistole in den Einfüllstutzen einführt bzw. einführen möchte.

Selbstverständlich darf der Zapfen oder das Formstück den Kraftstofffluss aus der "richtigen" Tank-Zapfpistole mit dem größeren Querschnitt nicht wesentlich behindern, da andernfalls deren Abschaltautomatik aktiviert werden würde. In diesem Sinne kann der Endabschnitt des Formstücks durch zumindest einen, bevorzugt jedoch zwei oder mehrere sich kreuzende Stege gebildet sein, die von der Innenwand des Einfüllstutzens ausreichend beabstandet sind, um eine "richtige" Tank-Zapfpistole über den Endabschnitt stecken zu können. Dabei kann das Formstück über einen sich in Richtung zum Tank an den Endabschnitt anschließenden Befestigungsabschnitt, in welchem Durchtrittsöffnungen für einzufüllenden Kraftstoff vorgesehen sind, an der Wand des Einfüllstutzens oder Tankvolumens befestigt sein.

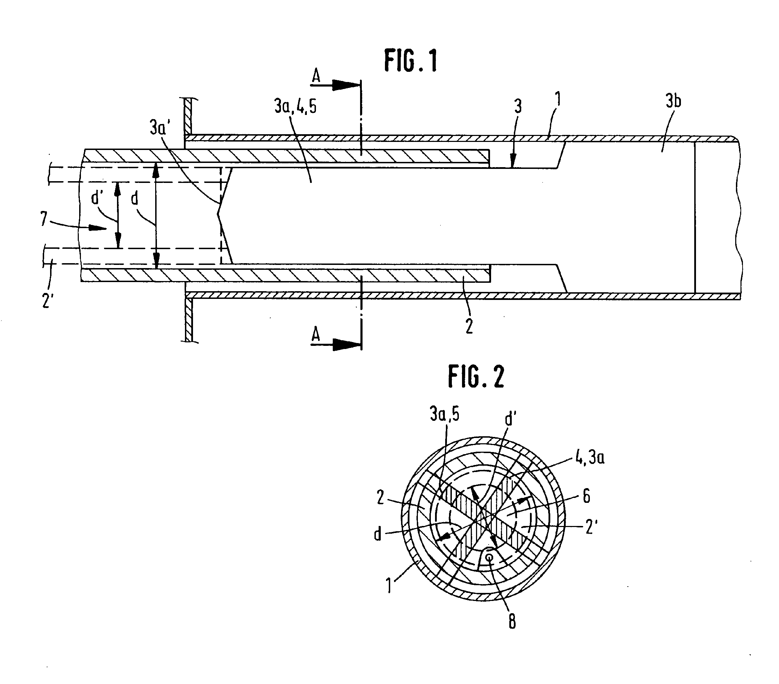

Im folgenden wird die Erfindung anhand eines bevorzugten, lediglich prinzipiell dargestellten Ausführungsbeispiels weiter erläutert, wobei die beigefügte **Figur 1** einen Längsschnitt durch einen erfindungsgemäßen Einfüllstutzen mit eingeführter "richtiger" Tank-Zapfpistole mit größerem Durchmesser zeigt, während in **Figur 2** (im wesentlichen) der Schnitt A-A aus Figur 1 dargestellt ist.

Mit der Bezugsziffer 1 ist ein an einem nicht dargestellten Kraftstofftank eines Kraftfahrzeugs vorgesehener Einfüllstutzen bezeichnet, von dem hier lediglich der für die vorliegende Erfindung wesentliche Abschnitt dargestellt ist und durch den hindurch Kraftstoff in den Kraftstofftank eingefüllt werden kann, indem in den Einfüllstutzen eine Tank-Zapfpistole 2 eingeführt wird. Wie bekannt existieren (zur Betankung von PKWs) an den Tankstellen zwei unterschiedliche Tank-Zapfpistolen, nämlich solche mit einem größeren Außen-Durchmesser von 24 mm, deren Innen-Durchmesser d = 20 mm beträgt, und solche mit einem geringeren Außen-Durchmesser von 20,5 mm, deren Innen-Durchmesser d' = 17 mm beträgt. Eine letztgenannte ist in **Figur 2** zusätzlich zur Schnitt-Darstellung unter der Bezugsziffer 2' dargestellt und wird grundsätzlich zur Abgabe von bleifreiem Ottokraftstoff verwendet. Eine erstgenannte mit größerem Durchmesser d ist in den Figuren unter der Bezugsziffer 2 dargestellt und wird grundsätzlich zur Abgabe von Dieselkraftstoff verwendet. (In den Figuren sind die Durchmesser-Abmessungen d, d' zur besseren Verdeutlichung nicht maßstäblich dargestellt).

Wie **Figur 1** zeigt, wird eine Tank-Zapfpistole 2 hier von links gemäß Pfeilrichtung 7 in den Einfüllstutzen 1 eingeführt, um den Kraftstofftank, der sich rechtsseitig an den Einfüllstutzen 1 anschließt, zu befüllen. Im Einfüllstutzen 1 ist ein Formstück 3 angeordnet, dessen der eingeführten Tank-Zapfpistole 2 zugewandter Endabschnitt 3a solchermaßen ausgebildet und bemessen ist, dass dieser Endabschnitt 3a in den Innenquerschnitt 2a dieser Zapfpistole 2 hineinragen kann. Anders ausgedrückt kann somit - wie dargestellt - eine "richtige" Tank-Zapfpistole 2 mit größerem Innen-Durchmesser d über diesen Endabschnitt 3a des Formstücks gesteckt werden. Hingegen kommt eine Tank-Zapfpistole 2' mit kleinerem Durchmesser d' an der Stirnseite 3a' des Formstück-Endabschnitts 3a zum Anschlag und kann somit nicht über diesen Endabschnitt 3a gesteckt werden, wie aus Figur 2, in welcher zusätzlich zur Darstellung des Schnittes A-A aus Figur 1 die Abmessung einer "falschen" Tank-Zapfpistole 2' eingezeichnet ist, hervorgeht.

Selbstverständlich muss trotz des in die "richtige" Tank-Zapfpistole 2 hineinragenden Formstück-Endabschnittes 3a ein im wesentlichen unbehindertes Befüllen des Tanks ermöglicht werden, d.h. Kraftstoff muss aus der Tank-Zapfpistole 2 in den Einfüllstutzen 1 austreten und von diesem (in **Figur 1** nach rechts) in den Tank gelangen können. Hierfür ist der Endabschnitt 3a des Formstücks 3 durch hier zwei sich kreuzende Stege 4, 5 gebildet, die von der Innenwand des Einfüllstutzens 1 ausreichend beabstandet sind, um eine "richtige" Tank-Zapfpistole über den Endabschnitt 3a stecken zu können, wie insbesondere aus **Figur 2** hervorgeht.

Um das Formstück 3 im Einfüllstutzen 1 zu fixieren, weist dieses einen sich in Richtung zum Tank an den Endabschnitt 3a anschließenden Befestigungsabschnitt 3b auf, in welchem Durchtrittsöffnungen 6 für einzufüllenden Kraftstoff vorgesehen sind, und der an der Innen-Wand des Einfüllstutzens 1 auf nicht näher dargestellte Weise befestigt ist. Konkret sind hier im Befestigungsabschnitt 3b die Stege 4, 5 bis zur Innenwand des Einfüllstutzens 1 verlängert, so dass die Durchtrittsöffnungen 6 durch die Kreisquerschnitt-Sektoren zwischen den Stegen 4, 5 gebildet werden, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen. Bspw. kann der sog. Aufsteckvorgang, bei dem die Zapfpistole 2 mit dem größeren Durchmesser d über den Formstück-Endabschnitt 3a geführt wird, dadurch erleichtert werden, dass die Stirnseite 3a' dieses Endabschnitts 3a abgerundet ausgebildet ist, und nicht wie figürlich dargestellt kegelförmig abgeschrägt. Im übrigen erkennt man in Figur 2 noch, dass zwischen den Stegen 4, 5 ausreichender Freiraum für die innerhalb der Zapfpistole 2 an deren Innenwand verlaufende Kraftstoffdampf-Absaugleitung 8 ist.

Bei einer weiteren möglichen Ausführungsform kann das Formstück rohrförmig ausgebildet sein, wobei dieses Rohrstück bspw. über Stege ähnlichen denen im figürlich dargestellten Ausführungsbeispiel an der Innenwand des Einfüllstutzens gehalten sein kann. Alternativ können hierfür Haltebleche mit Durchtrittsbohrungen vorgesehen sein, wobei der Innenquerschnitt des rohrförmigen Formstücks jedoch geschlossen sein sollte, um zu verhindern, dass durch diesen hindurch Kraftstoff aus der Zapfpistole in den Tank eingefüllt wird. Stets erhält man mit den erfindungswesentlichen Merkmalen eine sichere und einfache Vorrichtung, mit der eine Falschbetankung von dieselmotorisch angetriebenen Kraftfahrzeugen mit Bleifrei-Ottokraftstoff vermieden werden kann.

## Patentansprüche

1. Kraftfahrzeug-Kraftstofftank mit einem Einfüllstutzen (1), der hinsichtlich seiner Abmessung zur Aufnahme einer einen größeren Durchmesser (d) aufweisenden Tank-Zapfpistole (2), insbesondere einer Zapfpistole für Dieselkraftstoff, vorgesehen ist, sowie mit einem Element, welches ein Befüllen des Kraftstofftanks mit einer Tank-Zapfpistole (2) mit dem besagten größeren Durchmesser (d) zulässt, während der Versuch, den Kraftstofftank aus einer Tank-Zapfpistole (2') mit einem kleineren Durchmesser (d') zu befüllen, behindert wird,
**dadurch gekennzeichnet, dass** das Element ein in den Einfüllstutzen (1) eingesetztes Formstück (3) mit einer derartigen Abmessung ist, dass dieses Formstück (3) mit seinem einer eingeführten Tank-Zapfpistole (2) zugewandten Endabschnitt (3a) in den Innenquerschnitt einer Zapfpistole (2) mit größerem Durchmesser (d) hineinragen kann, während eine Tank-Zapfpistole (2') mit kleinerem Durchmesser (d') an der Stirnseite dieses Formstück-Endabschnitts (3a) zum Anschlag kommt und somit nicht über diesen Endabschnitt (3a) gesteckt werden kann.

2. Kraftfahrzeug-Kraftstofftank nach Anspruch 1,
**dadurch gekennzeichnet, dass** der Endabschnitt (3a) des Formstücks (3) durch zumindest einen, bevorzugt jedoch zwei oder mehrere sich kreuzende Stege (4, 5) gebildet wird, die von der Innenwand des Einfüllstutzens (1) ausreichend beabstandet sind, um eine Tank-Zapfpistole (2) mit dem besagten größeren Durchmesser (d) über den Endabschnitt (3a) stecken zu können, und dass dieses Formstück (3) über einen sich in Richtung zum Tank an den Endabschnitt (3a) anschließenden Befestigungsabschnitt (3b), in welchem Durchtrittsöffnungen (6) für einzufüllenden Kraftstoff vorgesehen sind, an der Wand des Einfüllstutzens (1) oder Tankvolumens befestigt ist.
